# EUROPÄISCHE PATENTSCHRIFT

(11) **EP 0 625 923 B1**
(45) Veröffentlichungstag und Bekanntmachung des Hinweises auf die Patenterteilung: **12.07.1995**
(21) Anmeldenummer: 93917378.7
(22) Anmeldetag: 04.02.1993
(51) Int. Cl.: B01D 1/18, F26B 21/04, B01J 2/16

(54) **VERFAHREN ZUM HERSTELLEN VON GRANULATEN, DIE ALS NETZ-, WASCH- UND/ODER REINIGUNGSMITTEL GEEIGNET SIND**
PROCESS FOR PRODUCING GRANULATES USEFUL AS WETTING, WASHING AND/OR CLEANING AGENTS
PROCEDE DE FABRICATION DE GRANULATS CONVENANT COMME AGENTS MOUILLANTS, DETERGENTS ET/OU NETTOYANTS

(30) Priorität: 12.02.1992 DE 4204090; 12.02.1992 DE 4204035; 27.02.1992 DE 4206050; 02.03.1992 DE 4206495
(43) Veröffentlichungstag der Anmeldung: 30.11.1994
(73) Patentinhaber: Henkel Kommanditgesellschaft auf Aktien, 40191 Düsseldorf (DE)
(72) Erfinder: RÄHSE, Wilfried, D-4000 Düsseldorf 13 (DE); BECK, Wilhelm, D-4000 Düsseldorf 13 (DE); JUNG, Dieter, D-4010 Hilden (DE); SONNEMANN, Dieter, D-4000 Düsseldorf 31 (DE)
(86) Internationale Anmeldenummer: EP9300265
(87) Internationale Veröffentlichungsnummer: WO9315812

(56) Entgegenhaltungen:
- EP-A- 0 115 285
- FR-A- 919 734
- PATENT ABSTRACTS OF JAPAN vol. 13, no. 510 (C-654)15. November 1989

## Beschreibung

Die Erfindung betrifft ein Verfahren zum insbesondere kontinuierlichen Herstellen von schütt- und rieselfähigen Granulaten von Wertstoffen oder Wertstoffgemischen, die als Netz-, Wasch und/oder Reinigungsmittel und/oder zur Verwendung in solchen Mitteln geeignet sind, aus ihren wäßrigen Lösungen und/oder Suspensionen durch Sprühtrocknung oder Wirbelschicht-Sprühgranulation oder dergleichen innerhalb eines Trocknungsbehälters mit einem Heißgasstrom. Das erfindungsgemäße Verfahren arbeitet mit einem oder mehreren Trocknungsschritten, wobei überhitzter Wasserdampf als Trocknungsgas verwendet wird.

Die Sprühtrocknung wäßriger Zubereitungen von Wertstoffen der genannten Art, die in großem Umfange beispielsweise als Textilwaschmittel Verwendung finden, wird seit Jahrzehnten in großtechnischem Maßstab durchgeführt. Als Trocknungsgasstrom werden Heißluft bzw. Gemische von Luft und heißen Verbrennungsabgasen eingesetzt. Textilwaschpulver bzw. Wertstoffe und/oder Wertstoffgemische zur Herstellung von Textilwaschmitteln in schütt- und rieselfähiger Pulverform werden in entsprechenden Sprühtürmen in der Regel im Bereich des Umgebungsdrucks in Gleichstrom- oder häufiger in Gegenstromfahrweise gewonnen.

Die Anmelderin beschreibt in ihrer älteren Anmeldung DE-A 40 30 688 ein Verfahren zur Gewinnung solcher feinteiliger fester schütt- beziehungsweise rieselfähiger Wertstoffe oder Wertstoffgemische für Netz-, Wasch- und/oder Reinigungsmittel aus ihren wäßrigen Zubereitungen, wobei überhitzter Wasserdampf als trocknender Heißgasstrom eingesetzt und dabei die Trocknung des partikulären Gutes vor dessen Gefährdung durch thermische Einwirkung abgebrochen wird. Erforderlichenfalls wird dabei die lagerbeständige Schütt- beziehungsweise Rieselfähigkeit des derart partiell aufgetrockneten Gutes durch Zusatz solcher Mischungsbestandteile sichergestellt, die zur Bindung begrenzter Wassermengen befähigt sind. Neben oder anstelle dieser Maßnahme kann auch eine Nachbehandlung zur Homogenisierung des Restfeuchtegehaltes im partikulären Gut und/oder dessen Nachtrocknung unter Wertstoff-schonenden Bedingungen angeschlossen werden. Die Lehre der im nachfolgenden geschilderten Erfindung betrifft eine gezielte Ausgestaltung dieses Verfahrens aus der genannten älteren Anmeldung. Die erfindungsgemäße Lehre will dabei gerade beim Einsatz von überhitztem Wasserdampf als Trocknungsgas die Gewinnung höchstwertiger Wertstoffe beziehungsweise Wertstoffgemische des hier betroffenen Arbeitsbereiches ermöglichen. Verständlich wird dabei die Aufgabenstellung der Erfindung aus den nachfolgenden lediglich beispielhaft gebrachten Überlegungen:

Die in der Praxis heute an hochwertige Reinigungsmittel, insbesondere Textilwaschmittel, gestellten Anforderungen erschöpfen sich nicht in Erwartungen zur Leistungsfähigkeit im praktischen Einsatz. Wichtig sind darüberhinaus das visuelle Erscheinungsbild - bei Textilwaschmitteln beispielsweise die Hellfarbigkeit - sowie weiterführende physikalische Stoffeigenschaften wie gute Rieselfähigkeit, hohes Schüttgewicht, rasches Auflösungsvermögen in Wasser bzw. gute Einspüleigenschaften und dergleichen.

Die Erfindung geht von der Aufgabe aus, im Rahmen des hier betroffenen Arbeitsgebietes für die Wertstofftrocknung mit überhitztem Wasserdampf als Trocknungsmedium optimierte Bedingungen aufzuzeigen, die den Zugang zu den geforderten hochwertigen Wertstoffen bzw. Wertstoffgemischen im Trockenzustand ermöglichen.

Zu berücksichtigen ist in diesem Zusammenhang, daß bis heute die praktischen Erfahrungen beim Einsatz von Trocknungsverfahren unter Verwendung von überhitztem Wasserdampf als Trocknungsgas sehr beschränkt sind, obwohl diese Technologie an sich seit dem Anfang dieses Jahrhunderts bekannt ist und in der Literatur wiederholt beschrieben wird. Die ältere Patentanmeldung DE-A 40 30 688 setzt sich mit dem einschlägigen druckschriftlichen Stand der Technik ausführlich auseinander. Auf diese Angaben der älteren Anmeldung sei hier verwiesen und lediglich die nachfolgenden Veröffentlichungen benannt, die ihrerseits umfangreiche Literaturverzeichnisse zu diesem Arbeitsgebiet beinhalten: A.M. Trommelen et al. "Evaporation and Drying of Drops in Superheated Vapors" AIChE Journal 16 (1970) 857 - 867; Colin Beeby et al. "STEAM DRYING" Plenary Lecture, Proc. 4th Int. Drying Sym. Kyoto (eds. R. Toei and Arun S. Mujumdar) 1984, Bd. 1, 51-68 sowie W.A. Stein "Berechnung der Verdampfung von Flüssigkeit aus feuchten Produkten im Sprühturm" Verfahrenstechnik 7 (1973) 262 - 267.

Die Erfindung betrifft also die Lösung der zuvor geschilderten Aufgabenstellung der Gewinnung in vielgestaltiger Weise hochwertiger Wertstoffe beziehungsweise Wertstoffgemische, die als Netz-, Wasch- und/oder Reinigungsmittel und/oder zur Verwendung in solchen Mitteln geeignet sind. Die Erfindung betrifft dabei ein Verfahren zur Trocknung dieser wasserhaltigen Wertstoffe oder Wertstoffgemische, die auch als wäßrige Zubereitungen vorliegen können, unter Einsatz von überhitztem Wasserdampf als Trocknungsgas, das nach Ausschleusen des verdampften Wasseranteiles im Kreislauf in die Trocknungsstufe zurückgeführt wird.

Wird mit überhitztem Wasserdampf als Trocknungsgas gearbeitet, so ist es notwendig, den im Kreislaufgas enthaltenen Staub abzuscheiden, um die Funktion des Kreislaufgebläses und des Überhitzers sicherzustellen und Ablagerungen in den Rohrleitungen zu vermeiden. Dies gilt insbesondere bei einem Granulierverfahren, das eine Zerstäubung einschließt. Der dabei entstehende Feinstaub würde nämlich zu einer Abrasion der im Kreislauf des Trocknungsgases angeordneten Apparate führen.

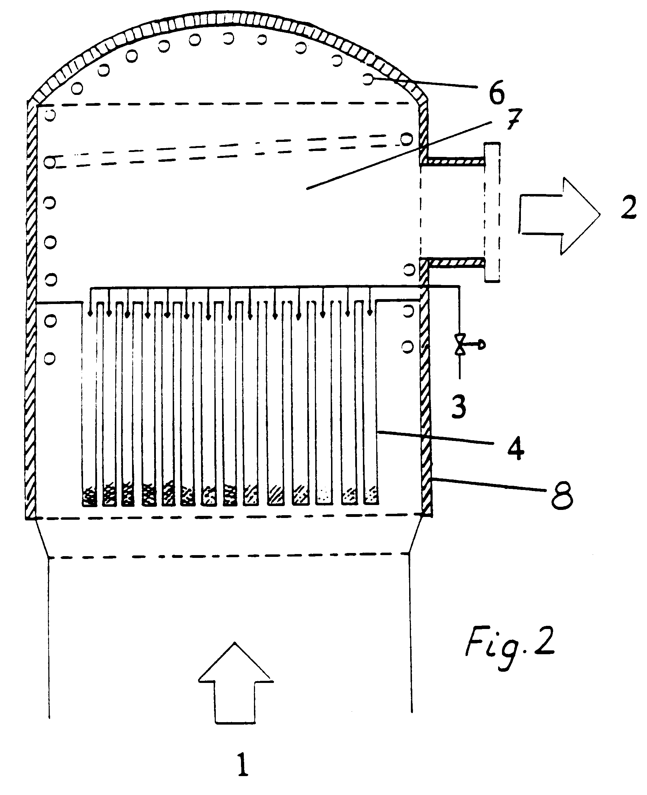

Bei der Trocknung mit überhitztem Wasserdampf, der im Kreislauf geführt wird, ist es üblich diesen Staub durch Zyklone abzuscheiden (Drying 1980 (Volume I) - Developments in Drying, S. 320 - 331, insbesondere Figur 2, Hemisphere Publishing Corporation, N. Y. (1980) und Gehrmann, Chem.-Ing.-Techn. 62 (1990) Nr. 10, S. A 512 - A 520, insbesondere Abb. 5). Bei anorganischen Trocknungsgütern ist eine Reinigung durch solche Zyklone ausreichend. Bei einem organischen Trocknungsgut neigt jedoch der im heißen Wasserdampf-Kreislaufgas enthaltene Filterstaub zu Anbackungen am Dampfgebläse, am Wärmeaustauscher, den Rohrleitungen und anderen Anlageteilen. Die Reinigungswirkung eines Zyklons reicht hier nicht mehr aus.

Erfindungsgemäß wird daher vorgeschlagen, daß man den Wasserdampfkreislaufstrom von mitgetragenen Anteile des Einsatzguts mittels aus Geweben und/oder Filzen, vorzugsweise aus Nadelfilz bestehenden Filtern, insbesondere Schlauchfiltern, reinigt. Im Gegensatz zur Reinigung mit Zyklonen läßt sich der Staubgehalt des Kreislaufgases mit Filtern auf 10 mg/m³, vorzugsweise bis auf 5 mg/m³ herabsetzen.

Bei der Verwendung von überhitztem Wasserdampf als Trocknungsgas kühlt sich dieses beim Vorbei streichen an den feuchten Partikeln ab und der Wassergehalt nimmt zu. Strömt das Trocknungsgas danach durch das Filter, so besteht die Gefahr der Kondensation von Nasser am Filtergewebe bzw. Filz und im Reingasraum, die auf jeden Fall vermieden werden sollte. Aus diesem Grunde ist es vorteilhaft, wenn die Filter und/oder der Reingasraum zusätzlich beheizt werden. Die Begleitheizung des Filters kann z. B. mittels einer Rohrschlange an der Innenwand des Filtergehäuses oder durch einen beheizbaren Doppelmantel vorgenommen werden.

Bei der Verwendung von überhitztem Wasserdampf als Kreislaufgas zur Trocknung wurde bisher auf die Anwendung von Filtern für Entstaubung verzichtet. Zum einen macht die Trocknung mit überhitztem Dampf höhere Temperaturen am Trockneraustritt notwendig, bei denen sich das Filtermaterial noch nicht zersetzen darf. Zum anderen besteht die Gefahr der Hydrolyse des Filtermediums in der Nasserdampfatmosphäre. Die Trocknung mit überhitztem Wasserdampf wurde unter anderem auch aus diesen Gründen bisher bei Gütern angewandt, die nicht zu hohen Staubbildungen neigen, so daß Zyklone zur Entstaubung ausreichen. Erfindungsgemäß werden jedoch Filter zur Entstaubung des Trocknungsgases eingesetzt, die zum einen auch bei den hohen Temperaturen in der Dampfatmosphäre hydrolysebeständig und bei den hohen Austrittstemperaturen des Trocknungsgases temperaturbeständig sein müssen.

Damit die Reinigung der Filter das Trocknungsverfahren möglichst wenig beeinträchtigt, wird vorgeschlagen, daß man den Wasserdampfkreislaufstrom von außen nach innen durch die Schlauchfilter strömem läßt und diese, insbesondere periodisch, mit Druckgasstößen von innen her beaufschlagt, so daß sich an den Filtern abgelagerte Anteile des Einsatzguts ablösen. Die kurzen Druckgasstöße erzeugen eine Druckwelle, die sich über die ganze Schlauchfläche fortsetzt. Dabei werden die Filterschläuche gespannt, und der anhaftende Feinstaub wird nach unten hin abgeworfen. Die Abreinigungsfolge kann vorteilhaft automatisch gesteuert werden. Damit die Wasserdampfatmosphäre nicht durch Fremdgase, z. B. Luft, verunreinigt wird und die inerten Bedingungen aufrecht erhalten werden, setzt man vorteilhaft als Druckgas zum Reinigen der Filter überhitzten Wasserdampf ein. Vorteilhaft ist in diesem Fall ebenfalls, daß eine Oxidationsbeständigkeit des Filtermaterials nicht notwendig ist, wenn auch ansonsten eine inerte Atmosphäre aufrechterhalten wird.

Separate Filtergehäuse und zusätzliche Austragsvorrichtungen des Filterstaubs aus den Gehäusen sind nicht notwendig, wenn man den Wasserdampfkreislaufstrom von unten nach oben im Gegenstrom zum Trocknungsgut und durch die innerhalb des oberen Bereichs des Trocknungsbehälters angeordneten Filter leitet. Der abgereinigte Feinstaub fällt direkt im Trocknungsbehälter an. Insbesondere ist es bevorzugt, wenn man den Wasserdampf durch senkrecht oberhalb der Sprühzone bzw. des Wirbelbetts angeordnete Filter führt. Der von den Filterelementen abgereinigte Feinstaub fällt dann nämlich in die Sprühzone bzw. das Wirbelbett zurück und agglomeriert dort mit den anderen Partikeln.

Die Reinigung der Filterschläuche erfolgt auch deshalb mit Dampf, um die Gefahr von Staubexplosionen auszuschließen. Auch die Produktqualität wird erhöht, wenn der Zutritt von Sauerstoff in das Kreislaufgas während der Abreinigung vermieden wird.

Die Erfindung betrifft in weiteren Ausführungsformen die Anwendung dieses Verfahrens zur Gewinnung von rieselfähigen Tensid-Feststoffen, insbesondere aus dem Bereich der Aniontenside auf Naturstoffbasis, weiterhin die Anwendung auf die Gewinnung getrockneter Wertstoffe auf Silikat-Basis, die insbesondere in Textilwaschmitteln Verwendung finden können, sowie schließlich auf die Anwendung des beschriebenen Verfahrens zur Gewinnung sogenannter Textilwaschmittel-Turmpulver, denen temperatursensitive und/oder wasserdampfflüchtige Komponenten zum Aufbau beziehungsweise zur vollen Rezeptierung der fertigen Textilwaschmittel nachträglich zugesetzt werden können.

Die im Rahmen der vorliegenden Offenbarung betroffene technische Lehre ist eine Weiterentwicklung der bereits mehrfach zitierten älteren Anmeldung DE-A 40 30 688. Aus Gründen der Vollständigkeit der Erfindungsoffenbarung wird hiermit die Offenbarung dieser älteren Anmeldung ausdrücklich auch zum Gegenstand der vorliegenden Erfindungsoffenbarung gemacht. Darüberhinausgehend sind die folgenden Verfahrenselemente wichtig:
Auch unter den erfindungsgemäßen Arbeitsbedingungen kann die Trocknung mit dem überhitzten Wasserdampf einerseits als Sprühtrocknung und/oder andererseits aber auch als Trocknung in Wirbelschicht vorgenommen werden. Vergleichsweise hoch wasserhaltige Einsatzmaterialien liegen beispielsweise als fließfähige und versprühbare wäßrige Lösungen, Emulsionen und/oder Suspensionen der aufzutrocknenden Wertstoffe beziehungsweise Wertstoffgemische vor. Einsatzmaterialien dieser Art werden in einer wichtigen Ausführungsform der an sich bekannten Technologie der Sprühtrocknung unterworfen. Die Sprühtrocknung kann in entsprechend ausgerüsteten Sprühtürmen in Gleichstrom- oder in Gegenstromfahrweise vorgenommen werden. Die Anwendung des Gegenstromprinzips ist auch im Rahmen des erfindungsgemäßen Arbeitens in der Regel bevorzugt. Wird andererseits das erfindungsgemäße Trocknungsprinzip im Rahmen einer Wirbelschichttrocknung eingesetzt, so können auch hier die bekannten Arbeitsprinzipien einer möglichen Kornvergrößerung zum Einsatz kommen.

In der Regel wird erfindungsgemäß im Bereich des Normaldrucks gearbeitet. Gleichwohl schließt die Erfindung mäßige Über- oder Unterdrücke ausdrücklich mit ein.

Zur Durchführung des erfindungsgemäßen Verfahrens gelten im übrigen weitgehend die Angaben des eingangs genannten älteren Schutzrechtes der Anmelderin zur Trocknung der hier betroffenen Wertstoffgemische mit überhitztem Wasserdampf als Trocknungsgas. Zur Vervollständigung der Erfindungsoffenbarung werden diese Angaben hier - soweit erforderlich - auszugsweise wiederholt:
In der älteren Anmeldung ist als wesentlicher Gedanke zum Verständnis der Lehre des Trocknens von Wirkstoffgemischen der hier betroffenen Art mittels Heißdampf die Möglichkeit zum Verzicht auf die Einstellung optimaler Trocknungsergebnisse durch Heißdampfeinwirkung im Verfahrensendprodukt gesehen. Grundsätzlich gilt das auch im Rahmen der erfindungsgemäßen Lehre. Es hat sich allerdings gezeigt, daß beim zuverlässigen Ausschluß von Störfaktoren wie Luft bzw. Sauerstoff auch solche Stoffgemische vergleichsweise temperaturunempfindlich sind, die unter den konventionellen Trocknungsbedingungen mit Heißgasen schneller zu unerwünschten Fremdreaktionen - beispielsweise Verfärbung, Verkrustung und dergleichen - neigen. Für den Einsatz der Heißdampftrocknung bedeutet das, daß ein sicheres Arbeiten sowohl mit Heißdampf in vergleichsweise hohen Temperaturbereichen als auch Auftrocknungsgrade bis auf sehr geringe Restfeuchtewerte ohne negative Beeinträchtigung der Stoffbeschaffenheit möglich sind. So können Restfeuchten deutlich unter 1 Gew.-%, beispielsweise im Bereich bis etwa 0,5 Gew.-% oder sogar noch darunter, im Trockengut eingestellt werden. Gleichzeitig kann mit Arbeitstemperaturen des aus der Trocknungszone austretenden verbrauchten Dampfes von oberhalb 100 bis 110°C, vorzugsweise oberhalb 150°C und insbesondere oberhalb 180°C, gearbeitet werden.

Gleichwohl gilt, daß auch Restfeuchten gegebenenfalls beträchtlichen Ausmaßes toleriert werden können, wenn in der Zusammensetzung des Gutes sichergestellt ist, daß durch eine Art "Innerer Trocknung" eine soweitgehende Bindung dieses Restwassers stattfindet, daß die lagerbeständige Schütt- und Rieselfähigkeit des Trockengutes gewährleistet ist.

Wie in der älteren Anmeldung beschrieben, sieht auch die Lehre der Erfindung neben oder anstelle dieses Hilfsmaßnahme die Nachbehandlung eines primär angefallenen teilgetrockneten Gutes vor. Eine solche Nachbehandlung wird durch 2 technische Konzeptionen bestimmt, die auch miteinander verbunden werden können.

Die erste dieser Konzeptionen geht von der Tatsache aus, daß der individuelle Auftrocknungsgrad des jeweils betroffenen Tröpfchens von seiner Teilchengröße bestimmt wird. Wird im erfindungsgemäßen Sinne das Sprühtrocknungsverfahren zu einem Zeitpunkt abgebrochen, an dem noch beträchtliche Mengen an Restfeuchte im Gut vorliegen, dann wird eine integrale Betrachtung des Restfeuchtegehaltes der Wirklichkeit nur teilweise gerecht. In der differentiellen Betrachtung der Verteilung dieser Restfeuchte über die einzelnen Gutanteile zeigt sich, daß die Fein- beziehungsweise Feinstanteile sehr weitgehend oder vollständig aufgetrocknet sein können, während die gröberen Gutanteile noch so beträchtliche Feuchtigkeitsmengen enthalten, daß eine lagerbeständige Schütt- und Rieselfähigkeit für das der Sprühzone entnommene Gut noch nicht sichergestellt ist. In einer wichtigen Ausführungsform des erfindungsgemäßen Verfahrens wird dementsprechend eine "Nachtrocknung" des Primärgutes aus der Sprühtrocknungszone durch einen zusätzlichen Behandlungsschritt erreicht, der - ohne das pulverförmige Gut einer Gefährdung durch Verklebung auszusetzen - zu einer Homogenisierung des Feuchtegehaltes über das Gesamtgut unabhängig von der individuellen Teilchengröße führt. Auf diese Weise kann aus den noch vergleichsweise feuchten gröberen Anteilen des Gutes soviel an Restfeuchte in das Fein- und Feinstgut übertragen werden, daß nach diesem Homogenisierungsschritt die lagerbeständige Schütt- und Rieselfähigkeit des Trockengutes gewährleistet sind, ohne das es des zusätzlichen Austrages weiterer Feuchtemengen aus dem Schüttgut bedarf.

Zur Verwirklichung dieser Nachbehandlungsstufe sind alle Verfahrenstechniken geeignet, die den Feuchtigkeitsausgleich zwischen den einzelnen Partikeln unter gleichzeitiger Verhinderung eines Verklebens der Masse sicherstellen. Lediglich beispielhaft seien hier benannt das Umwälzen oder Schütteln des primär angefallenen Gutes im kontinuierlichen oder diskontinuierlichen Verfahren. Besonders geeignet kann eine Nachbehandlung des Gutes in einer Wirbelschicht sein, die im Vergleich zum Sprühtrocknungsverfahren eine sehr viel höhere Feststoffdichte aufweist. Hierbei kann mit beliebigen Gasen, beispielsweise ganz einfach mit Umgebungsluft, gearbeitet werden. Oxydative Materialgefährdungen und/oder unerwünschte Verunreinigungen der Abluft treten hierbei nicht mehr auf, beziehungsweise sind leicht zu beherrschen. Da das zu trocknende Gut der Sprühtrocknungszone mit erhöhter Temperatur - üblicherweise im Bereich von etwa 100°C - entnommen wird, kann über eine solche nachgeschaltete Feuchtigkeitshomogenisierung im Rahmen einer Wirbelschicht, beispielsweise mit Umgebungsluft noch eine geringfügige zusätzliche Absenkung der Restfeuchte erzielt werden.

Neben oder anstelle einer solchen Hilfsmaßnahme kann im erfindungsgemäßen Verfahren aber auch eine zusätzliche Trocknung zur weiteren Absenkung der Restfeuchte vorgesehen sein. Erweist sich diese Nachtrocknung als wünschenswert, so wird im allgemeinen eine solche zusätzliche Nachtrocknungsstufe hinreichend sein. Die Nachtrocknung in einer Sequenz mehrer Stufen ist von der Lehre der Erfindung jedoch nicht ausgeschlossen. Charakteristisch für die Nachtrocknungsstufe(n) ist, daß hier unter Bedingungen gearbeitet wird, die eine substantielle Gefährdung der Wertstoffe des Trockengutes ausschließen. Prinzipiell steht hier eine Mehrzahl von Verfahrensparametern zur Risikominderung zur Verfügung. Beispielhaft seien genannt: Absenkung der Temperatur der Heißgasphase, Verzicht auf überhitzten Wasserdampf als Heißgas und dessen Ersatz durch Trocknungsgase anderen Ursprungs, beispielsweise Luft und/oder Inertgas sowie Übergang in eine andere Trocknungstechnologie.

In einer bevorzugten Ausführungsform des erfindungsgemäßen Verfahrens wird beim Einsatz eines solchen Nachtrocknungsschrittes die Feststoffdichte des zu trocknenden Gutes im Heißgasstrom substantiell erhöht, so daß sich in dieser Nachtrocknung die Verfahrensprinzipien einer Wirbelschichttrocknung der Sprühtrocknung aus der ersten Verfahrensstufe anschließen. Die Stufe dieser nachgeschalteten Wirbelschichttrocknung kann ihrerseits mit beliebigen Trocknungsgasen betrieben werden. In der bevorzugten Ausführungsform der Erfindung wird auch hier überhitzter Wasserdampf als Heißgas eingesetzt. Durch den intensiven Temperaturaustausch zwischen den jetzt vergleichsweise dicht gepackten Feststoffteilchen kann damit aber der unerwünschten Überhitzung des zu trocknenden Gutes und insbesondere der Gefahr der Überhitzung des Feinkornanteiles dieses Gutes wirkungsvoll gegengesteuert werden. In bevorzugten Ausführungsformen der Erfindung können auch in diesem Falle durch Zusammensetzung des zu trocknenden Gutes die Elemente der zuvor diskutierten "Inneren Trocknung" zur Abbindung noch verbliebener Restfeuchte mitverwendet werden.

Für den Einsatz im erfindungsgemäßen Verfahren eignen sich insbesondere wäßrige Zubereitungen solcher Wertstoffe beziehungsweise Wertstoffkombinationen aus dem Gebiet der Netz-, Wasch- und/oder Reinigungsmittel, die durch kurzfristige Einwirkung von Wasser beziehungsweise Wasserdampf im Temperaturbereich von 100 bis 110°C nicht oder nicht wesentlich geschädigt werden. Geeignet sind insbesondere als Wertstoffbestandteile Komponenten dieser Art, die unter den Arbeitsbedingungen den angegebenen Temperaturbereich wenigstens für einen Zeitraum von etwa 0,5 - 1 min. schadlos überstehen. Durch Steuerung der Verfahrensparameter - neben der Auslegung der Sprühtrocknungszone seien beispielsweise genannt der erfindungsgemäß eingesetzte Arbeitstemperaturbereich und die Tröpfchen- bzw. Partikelgröße des versprühten Gutes - wird es möglich, die Verweildauer der jeweiligen Partikel unter den Bedingungen des überhitzten Wasserdampfes im Sekundenbereich zu wählen. Entscheidend ist, daß der Zeitraum dieser Temperatureinwirkung im erfindungsgemäßen Verfahrenstyp so kurz gehalten werden kann, daß unter den gewählten Arbeitsbedingungen substantielle Schädigungen des zu trocknenden Gutes noch nicht auftreten. So können beispielsweise auch an sich hydrolysegefährdete Tensidverbindungen unter diesen Arbeitsbedingungen Verweilzeiträume von einigen Minuten weitgehend unbeschadet überstehen. So wird es möglich, daß man im erfindungsgemäßen Trocknungsverfahren wäßrige Zubereitungen wasserlöslicher und/oder unlöslicher organischer und/oder anorganischer Wertstoffe aus Netz-, Wasch- und/oder Reinigungsmitteln der Trocknung unterwirft, die beispielsweise den nachfolgenden Stoffklassen zuzuordnen sind: Komponenten mit Tensidbeziehungsweise Emulgatorwirkung, anorganische und/oder organische Gerüstsubstanzen oder Builder-Komponenten, Waschalkalien, Stellmittel bzw. Neutralsalze, Textilweichmacher, Bleichaktivatoren, Hilfsstoffe zur Verbesserung des Schmutztragevermögens der Flotten wie Vergrauungsinhibitoren oder auch Abrasivstoffe.

Wird die Beibehaltung nicht unbeträchtlicher Wassermengen im Produkt der Haupttrocknung und damit gegebenenfalls die Bindung dieses Restwassers zur Sicherung der lagerbeständigen Schütt- beziehungsweise Rieselfähigkeit des Trockengutes gefordert, so werden erfindungsgemäß Hilfsstoffe eingesetzt, die bevorzugt als partikulärer Festkörper zur Wasserfixierung befähigt sind. Eine solche Fixierung von Restwasser kann beispielsweise über dessen Einbindung als Kristallwasser erfolgen. Ebenso ist aber auch eine rein absorptive Bindung begrenzter Wassermengen in Feststoffteilchen der hier betroffenen Art möglich, ohne daß dadurch eine unerwünschte Klebrigkeit bzw. Haftung der Teilchen gegeneinander ausgelöst werden muß. Die Hilfsstoffe werden dabei in wenigstens so hinreichenden Mengen eingesetzt, daß trotz der im Gut verbliebenen Restfeuchte die Sicherstellung der Schütt- und Lagerbeständigkeit gewährleistet ist.

Die das Restwasser-bindenden Hilfsstoffe können in einer Ausführungsform der Erfindung dem getrockneten Frischgut zweckmäßigerweise unmittelbar nach dessen Ausschleusung aus dem Verfahren zugesetzt und damit intensiv vermischt werden. In bevorzugten Ausführungsformen werden die Restwasser bindenden Hilfsstoffe allerdings wenigstens anteilsweise, vorzugsweise wenigstens überwiegend oder in der Regel in ihrer Gesamtmenge schon den wäßrigen Wertstoffzubereitungen vor ihrer Sprühtrocknung zugemischt. Möglich ist diese zuletzt genannte Ausführungsform immer dann, wenn die jeweilige Temperatursensitivität des zu trocknenden Gutes eine so weitgehende Trocknung zuläßt, daß die verbleibende Restfeuchte in hinreichendem Ausmaß durch solche mitverwendeten Hilfsstoffe aufgenommen und abgebunden werden kann.

In einer in diesem Zusammenhang bevorzugten Ausführungsform des erfindungsgemäßen Verfahrens werden als Restwasser bindende Hilfsstoffe entsprechende Wertstoffe aus da Bereich der Netz-, Wasch- und/oder Reinigungsmittel eingesetzt, die ihrerseits hinreichend temperaturunempfindlich sind. Typische Beispiele hierfür sind Kristallwasser-bindende anorganische Wertstoffe aus den Klassen der Builder-Komponenten, der Waschalkalien und/oder der sogenannten Stellmittel. Typische Beispiele der hier aufgezählten Wertstoff-Unterklassen sind Kristallwasser bindende Silikatverbindungen insbesondere aus der Klasse der Zeolithe. Ein für Textilwaschmittel besonders charakteristisches Beispiel ist hier heute der Zeolith-NaA in Waschmittelqualität und einem Calciumbindevermögen im Bereich von 100 - 200 mg CaO/g - vergleiche hierzu die Angaben der DE 24 12 837. Typische Beispiele für Kristallwasser-bindende Waschalkalien sind Soda oder Natriumbicarbonat, während als Neutralsalz beziehungsweise Stellmittel dem Natriumsulfat eine ausgeprägte Fähigkeit zur Bindung von beträchtlichen Mengen an Kristallwasser zukommt. Neben oder anstelle solcher Hilfsstoffe mit der Fähigkeit zur Kristallwasserbindung kann aber das Restwasser auch durch Hilfsmittel beziehungsweise entsprechende Wertstoffe mit der Fähigkeit zur absorptiven Wasserbindung eingesetzt werden. So ist es bekannt, daß bekannte Vergrauungsinhibitoren auf Stärke- beziehungsweise Zellulosebasis, textilweichmachende Hilfsmittel insbesondere auf Basis anorganischer, quellfähiger Silikate aber auch eine Reihe von unter Normalbedingungen festen organischen Tensidverbindungen in der Lage sind, nicht unbeträchtliche Wassermengen aufzunehmen ohne mit einer unerwünschten Oberflächenklebrigkeit darauf zu reagieren.

Je nach der Temperaturempfindlichkeit der eingesetzten Wertstoffe bzw. Wertstoffgemische einerseits und der Natur und der Menge der gegebenenfalls mitverwendeten Hilfsstoffe andererseits, können beträchtliche Restwassergehalte im feinteilig aufgetrockneten Gut zurückbleiben ohne dessen lagerbeständige Schütt- und Rieselfähigkeit zu gefährden. Erfindungsgemäß ist dementsprechend vorgesehen, die Trocknung mit überhitztem Wasserdampf bei Restwassergehalten des aus der Sprühzone entnommenen Gutes im Bereich von etwa 0,5 - 20 Gew.-% abzubrechen, wobei Restwassergehalte im Bereich von etwa 5 - 12 Gew.-% bevorzugt sein können. Die hier angegebenen Gew.-%-Bereiche beziehen sich dabei jeweils auf das Gewicht des aus der Wasserdampfzone entnommenen feinteiligen Gutes. Erfindungsgemäß ist es allerdings weiterhin bevorzugt, den Anteil dieses Restwassers, der nicht als Kristallwasser gebunden ist, einzugrenzen. So kann es zweckmäßig sein, diesen Wasseranteil auf höchstens etwa 10 Gew.-% vorzugsweise auf nicht mehr als etwa 5 - 7 Gew. -% und zweckmäßigerweise auf Werte von höchstens etwa 1 - 3 Gew.-% einzugrenzen. Auch hier gilt zur Gew.-%-Angabe das zuvor Gesagte. Unter Berücksichtigung des Fachwissens aus dem hier angesprochenen Sachgebiet gelingt schon damit zuverlässig auch und gerade unter Einsatz des überhitzten Wasserdampfes bei hohen Arbeitstemperaturen die Kombination der angestrebten Eigenschaften: Temperaturschonende hinreichende Auftrocknung, Abbruch der Trocknungsreaktion auch wenn noch beträchtliche Restwassergehalte im Gut vorliegen, um damit unerwünschte Temperatureinwirkungen auszuschließen, und gleichwohl Sicherstellung der lagerbeständigen Schütt- und Rieselfähigkeit im Sinne der Praxisanforderungen.

Wie bereits angegeben sieht das erfindungsgemäße Verfahren für die Stufe der Einstellung der jeweils gewünschten Restfeuchte zusätzliche Arbeitsmöglichkeiten vor, die neben oder anstelle des zuvor geschilderten Prinzips der Inneren Trocknung zum Einsatz kommen können. Diese alternativen Arbeitsmöglichkeiten sehen die Homogenisierung und/oder die stufenweise Absenkung des Feuchtigkeitsgehaltes im zu trocknenden Gut vor, wobei sich an die Stufe der Sprühtrocknung eine oder mehrere Nachtrocknungsstufen anschließen, die unter vergleichsweise gemäßigten Arbeitsbedingungen noch störende Feuchtigkeitsanteile austragen. Grundsätzlich sind hier alle dem Fachmann bekannten Nachtrocknungen im direkten oder indirekten Kontakt mit Heißgasen geeignet. Die bevorzugte Alternative des erfindungsgemäßen Verfahrens sieht auch für eine solche Nachtrocknung in zweckmäßigerweise einer zusätzlichen Arbeitsstufe den Einsatz von überhitztem Wasserdampf vor. Zur Minderung der Gefährdung des temperatursensitiven Gutes kann die Einsatztemperatur des überhitzten Wasserdampfes niedriger liegen als in der Stufe der Sprühtrocknung. Besonders bewährt hat sich jedoch die nachfolgende Alternative:
Das einen noch zu hohen Anteil an Restfeuchte aufweisende feinteilige Gut wird der Sprühtrocknungszone entnommen und in eine nachfolgende Wirbelschichttrocknung übergeführt. Dabei kann eine partielle Agglomerierung des noch hinreichend feuchten Gutes aus der Sprühtrocknungszone zu einem gröberem Agglomerat durchaus hingenommen werden oder sogar im Rahmen einer bevorzugten Ausführungsform im Sinne des erfindungsgemäßen Handelns liegen. Ein solcher partieller Agglomerierungsschritt kann insbesondere dazu dienen, den Feinanteil des der Sprühtrocknungszone entnommenen Gutes zu binden und dabei beispielsweise mit dem noch feuchteren Grobkorn dieses primären Trocknungsproduktes zu vereinigen. In der jetzt anschließenden Wirbelschichttrocknung wird in an sich bekannter Weise mit den stark erhöhten Feststoffdichten im Trocknungsraum gearbeitet, die zum intensiven Temperaturaustausch zwischen allen Feststoffteilchen der Wirbelschicht führen und damit unerwünschte Temperatursteigerungen in einem Anteil des zu trocknenden körnigen Gutes selbst dann verhindern, wenn auch hier mit Wasserdampf als Trocknungsgas gearbeitet wird, der auf vergleichsweise hohe Temperaturen überhitzt worden ist.

In einer solchen Nachtrocknungsstufe im Wirbelbett bedarf es in der Regel nur noch der Entfernung begrenzter Mengen der Restfeuchte um die lagerbeständige Rieselfähigkeit des körnigen Gutes sicherzustellen, so daß auch die Verweilzeit des Gutes in dieser Wirbelschichtnachbehandlung kurz gehalten werden kann und beispielsweise nur einige Minuten beträgt. Die Haupttrocknung in der Sprühzone und die Nachtrocknung in der Wirbelschicht können im Verbund eines kontinuierlichen Verfahrens oder aber auch als getrennte Verfahrensstufen unabhängig voneinander gefahren werden. Im einzelnen gilt hier das allgemeine Fachwissen.

In einer solchen nachgeschalteten zweiten Trocknungsstufe kann die noch vorliegende Restfeuchte anteilsweise oder praktisch vollständig ausgetragen werden. In praktischen Ausführungsformen wird bei Einsatz einer solchen Verfahrensmodifikation die Restfeuchte des der Sprühzone entnommenen Gutes zu wenigstens etwa 10 - 80 %, vorzugsweise etwa 20 - 70 % entnommen - % bezogen auf die Restfeuchte. Letztlich im Gut verbleibende Feuchte wird über die Innere Trocknung unschädlich gemacht.

In einer wichtigen Ausführungsform wird das erfindungsgemäße Verfahren zur Trocknung von Wertstoffabmischungen für den Aufbau von Textilwaschmitteln eingesetzt. Die zu trocknenden wäßrigen Einsatzmaterialien enthalten dabei vorzugsweise waschaktive Tenside zusammen mit Gerüst- beziehungsweise Builder-Substanzen, sowie gewünschtenfalls Waschalkalien und/oder Neutralsalze. Bevorzugt ist hier wenigstens ein Anteil der jeweils eingesetzten Mehrstoffmischungen zur Bindung und/oder Fixierung von Restwasser insbesondere in Form von Kristallwasser befähigt. Ebenso wie im Sprühtrocknungsverfahren von Textilwaschmitteln wird bei solchen Stoffmischungen in aller Regel nicht das Textilwaschmittel in seiner Gesamtheit der Sprühtrocknung ausgesetzt. Hier steht die extreme Temperaturempfindlichkeit peroxidenthaltender Bleichkomponenten wie Perborat-Monohydrat beziehungsweise -Tetrahydrat beziehungsweise entsprechender anderer besonders temperatursensitiver Komponenten entgegen. Als weitere Beispiele seien genannt Enzyme, Duftstoffe, gegebenenfalls auch Bleichaktivatoren und andere Kleinkomponenten. Auch die Lehre der Erfindung sieht dementsprechend unter anderem die Herstellung sogenannter Mehrkomponenten-Turmpulver vor, die einen Großteil der das Fertigwaschmittel ausmachenden Komponenten in Mischung vereinigt enthalten, nachträglich aber noch mit flüssigen und/oder festen weiteren Wirkstoffkomponenten beaufschlagt beziehungswise vermischt werden. Bekannte Beispiele für solche Flüssigkomponenten sind insbesondere leichtflüchtige niotensidische Komponenten, die im erfindungsgemäßen Verfahren zwar nicht mehr über das Abgas in die Umwelt entlassen werden, deren Zugabe zum Gesamtwaschmittel gleichwohl durch nachträgliches Aufdüsen auf ein erfindungsgemäß vorbereitetes saugfähiges Turmpulver einfach ausgestaltet werden kann.

Die Arbeitsbedingungen des erfindungsgemäßen Verfahrens ermöglichen den Einsatz hoher Temperaturen der im Kreislauf geführten Wasserdampfphase im Bereich des Trocknungsschrittes der Sprühtrocknung. In der Regel liegen die Arbeitstemperaturen nach der Überhitzung (Wiederaufheizung) oberhalb 150°C und vorzugsweise bei wenigstens etwa 200°C in der Gasphase. Dabei können Arbeitstemperaturen von 250°C und darüber besonders interessant sein, wobei insbesondere auch der Temperaturbereich von wenigstens 300°C, insbesondere 300 - 380°C in Betracht kommt. Für viele Fälle sind Arbeitstemperaturen im Bereich von etwa 270 - 350°C in der Wasserdampfphase besonders geeignet, dabei beziehen sich diese Temperaturangaben jeweils auf die Temperatur des der Sprühzone im Gleich- oder Gegenstrom zugeführten auf Optimal-Temperatur aufgeheizten Wasserdampfstromes. In an sich bekannter Weise sinkt im Verlaufe des Verweilens mit dem nassen beziehungsweise feuchten Gut die Temperatur des Wasserdampfes. Weitgehend energetische Überlegungen - insbesondere auch zu der beabsichtigten Weiterverwendung des auszukreisenden Dampfteilstromes - bestimmen die Mengenverhältnisse zwischen der zu verdampfenden flüssigen Wassermenge und der zugeführten Menge des überhitzten Wasserdampfes. Möglich sind hier Ausführungsformen, die nur eine beschränkte Absenkung der Dampftemperatur nach Verlassen der Sprühzone beispielsweise auf Werte im Bereich von etwa 190 - 250°C beinhalten, während in anderen Ausführungsformen eine weiterführende Ausnutzung der thermischen Energie des Wasserdampfes bis zu einer Absenkung der Dampftemperatur in die Nähe der Kondensationstemperatur unter Verfahrensbedingungen zweckmäßig beziehungsweise vorteilhaft sein kann. Im einzelnen werden diese Detailfragen durch die Ausgestaltung des Kreislaufverfahrens in seiner Gesamtheit mitbestimmt. Entsprechende Überlegungen gelten für den Einsatz von überhitztem Wasserdampf als Heißgas in einer gegebenenfalls vorgesehenen Nachtrocknungsstufe im Wirbelschichtverfahren. Auch die zuvor angegebenen Zahlenwerte gelten hier sinngemäß.

Grundsätzlich gilt für diese Überlegungen, daß im geschlossenen System mit einem Wasserdampfkreislaufstrom gearbeitet wird, dem der verdampfte Wasseranteil des Einsatzgutes entzogen wird, während der insbesondere im Trocknungsschritt abgegebene Energiebetrag dem Kreislaufstrom auf direktem Weg wieder zugeführt wird. Der abgezogene Wasserdampfteilstrom wird nach der Reinigung von mitgetragenen Gutanteilen in einer wichtigen Ausführungsform als Brauchdampf anderweitiger Verwendung zugeführt, nachdem gewünschtenfalls zunächst Druck und Temperatur dieses Dampfteilstromes den dort geforderten Bedingungen angeglichen worden sind. In einer anderen Ausführungsform des erfindungsgemäßen Verfahrens kann es zweckmäßig sein, wenigstens einen Anteil dieses abgezogenen Dampfteilstromes zu kondensieren und ihn von mitgetragenen Gutanteilen zu reinigen. Die dabei anfallende wäßrige Flüssigphase kann zusammen mit den darin vorliegenden ausgekreisten Wertstoffanteilen in das Trocknungsverfahren zurückgeführt werden. In diesem Zusammenhang ist es beispielsweise möglich, dampfförmige Anteile des ausgekreisten Gasstromes zur Aufkonzentrierung einer solchen Waschflüssigphase einzusetzen. Die zurückgeführten Flüssiganteile mit Wertstoffgehalten können unmittelbar der Sprühzone zugeführt oder zunächst mit den wäßrigen Frischzubereitungen vermischt und in dieser Form zur Trocknung in die Sprühzone eingegeben werden.

Eine besonders interessante Ausführungsform der erfindungsgemäßen Lehre sieht die Rückgewinnung und Verwertung der Kondensationswärme des aus dem Kreislauf ausgeschleusten Wasserdampfanteiles vor. Durch den Einsatz geeigneter Arbeitsschritte kann dabei die Recyclisierung auch der geringen Wertstoffanteile sichergestellt werden, die über den ausgeschleusten Heißdampfstrom den primären Kreislauf des Dampfes verlassen haben. Hier kann beispielsweis unter Ausnutzung der Kondensationswärme des ausgeschleusten Dampfanteiles wie folgt gearbeitet werden:
In einer bevorzugt mehrstufigen Eindampfanlage wird unter Ausnutzung der Kondensationswärme des abgezogenen, überwiegend Dampf-enthaltenden Mischgasstromes das Dampfkondensat aufkonzentriert. Das dabei anfallende Restkonzentrat wird in den Verfahrensprimärkreislauf zurückgeführt. Insbesondere kann dieses Restkonzentrat dem durch überhitzten Heißdampf zu trocknenden Wertstoffslurry zugegeben werden.

Gewünschtenfalls kann bei der Kondensation des aus dem Primärkreislauf ausgeschleusten Heißdampfes die dabei gegebenenfalls anfallende nicht kondensierbare Restgasphase - der gegebenenfalls vorliegende Anteil nicht kondensierbarer Bestandteile aus den zur Aufheizung eingesetzten Verbrennungsgasen, insbesondere Stickstoff und/oder Kohlendioxid im Falle der direkten Beheizung des Dampfes mit heißen Rauchgasen - einer weiteren Aufarbeitungsstufe zugeführt werden. Diese Gasanteile können auf diese Weise von jetzt noch mitgeführten Restanteilen des Trocknungsgutes befreit werden. Geeignet sind hier beispielsweise Behandlungsstufen wie Verbrennung, die Behandlung in Biofiltern und/oder in Waschanlagen. Durch eine solche Kombination der Maßnahmen eines praktisch vollständigen Recyclisieren der jeweiligen Teilströme auf Dampfbasis und der zuverlässigen Vernichtung von letzten Restspuren in den vergleichsweise beschränkten Mengen nicht kondensierbarer Gase, eröffnet sich auf dem hier betroffenen Arbeitsgebiet großtechnischer Fertigung erstmalig die Möglichkeit, Wertstoffe und Wertstoffgemische aus dem Gebiet der Wasch- und Reinigungsmittel praktisch oder wenigstens sehr weitgehend Abluft-frei und frei von beladenem Abwasser zu gewinnen.

Unabhängig davon und zusätzlich zu diesen Überlegungen sind mit der erfindungsgemäßen Arbeitsmethode beträchtliche Energieeinsparungen im Vergleich mit der bis heute üblichen Heißgastrocknung möglich. So sinkt durch die Wasserdampfkreislaufführung auf vergleichsweise hohem Temperaturniveau die im Kreislaufverfahren aufzubringende Wärmemenge pro Kilogramm des zu verdampfenden Wassers gegenüber den heute üblichen Trocknungsverfahren mit einmaligem Durchgang der heißen Trocknungsgase beträchtlich. Zusätzlich zur Schadstofffreiheit erfüllt das erfindungsgemäße Verfahren somit weiterführende Forderungen moderner Technologie für großtechnisch durchgeführte Verfahrensabläufe.

Im Nachfolgenden finden sich allgemeine Angaben von Wertstoffen für die unmittelbare oder mittelbare Verwendung bei der Herstellung von Netz-, Wasch- und/oder Reinigungsmitteln unter Einsatz der erfindungsgemäßen Arbeitsprinzipien, wobei dieses Zusammenstellung an heute üblichen Komponenten von Textilwaschmitteln dargestellt ist.

Als anionische Tenside sind zum Beispiel Seifen aus natürlichen oder synthetischen, vorzugsweise gesättigten Fettsäuren brauchbar. Geeignet sind insbesondere aus natürlichen Fettsäuren zum Beispiel Kokos-, Palmkern- oder Talgfettsäuren abgeleitete Seifengemische. Bevorzugt sind solche, die zu 50 - 100 % aus gesättigten C₁₂₋₁₈-Fettsäureseifen und zu 0 - 50 % aus Ölsäureseife zusammengesetzt sind.

Weiterhin geeignete synthetische anionische Tenside sind solche vom Typ der Sulfonate und Sulfate. Besondere Bedeutung kann dabei das erfindungsgemäße Verfahren für entsprechende Verbindungen pflanzlichen und/oder tierischen Ursprungs haben.

Als Tenside vom Sulfonattyp kommen Alkylbenzolsulfonate (C₉-₁₅-Alkyl), Olefinsulfonate, d.h. Gemische aus Alken- und Hydroxyalkansulfonaten sowie Sulfonate in Betracht, wie man sie beispielsweise aus C₁₂₋₁₈-Monoolefinen mit end- oder innenständiger Doppelbindung durch Sulfonieren mit gasförmigem Schwefeltrioxid und anschließende alkalische oder saure Hydrolyse der Sulfonierungsprodukte erhält. Geeignet sind auch die Alkansulfonate, die aus C₁₂₋₁₈-Alkanen durch Sulfochlorierung oder Sulfoxydation und anschließende Hydrolyse bzw. Neutralisation bzw. durch Bisulfitaddition an Olefine erhältlich sind, sowie insbesondere die Ester von alpha-Sulfofettsäuren (Estersulfonate), zum Beispiel die alpha-sulfonierten Methylester der hydrierten Kokos-, Palmkern- oder Talgfettsäuren.

Wichtige Tensid- beziehungsweise Emulgatorkomponenten sind in diesem Zusammenhang auch die sogenannten Di-salze, die sich durch Verseifung der zuvor genannten Alpha-sulfonierten Fettsäure-Methylester bzw. durch unmittelbare Sulfonierung von insbesondere gesättigten Fettsäuren - insbesondere C₁₂₋₁₈-Fettsäuren - herstellen lassen. Das erfindungsgemäße Verfahren schafft damit erstmalig die Möglichkeit großtechnisch problemfrei Tenside der hier und im nachfolgenden beschriebenen Art auf Naturstoffbasis in trockener rieselfähiger Konzentratform zur Verfügung zu stellen, die praktisch unbegrenzte Lagerbeständigkeit beinhaltet und damit einen wesentlichen Beitrag zum weltweit angestrebten ABS-Austausch leisten können.

Geeignete Tenside vom Sulfattyp sind die Schwefelsäuremonoester aus primären Alkoholen natürlichen und synthetischen Ursprungs, d.h. aus Fettalkoholen, zum Beispiel Kokosfettalkoholen, Talgfettalkoholen, Oleylalkohol, Lauryl-, Myristyl-, Palmityl- oder Stearylalkohol, oder den C₁₀₋₂₀-Oxoalkoholen, und diejenigen sekundärer Alkohole dieser Kettenlänge. Auch die Schwefelsäuremonoester der mit insbesondere 1 bis 6 Mol Ethylenoxid ethoxylierten Alkohole natürlichen und/oder synthetischen Ursprungs sind geeignete Komponenten. Als Beispiel für Synthese-Alkohole seien Verbindungen wie 2-Methyl-verzweigte C₉₋₁₁-Alkohole mit im Durchschnitt 3,5 Mol Ethylenoxid genannt. Ferner eignen sich sulfatierte Fettsäuremonoglyceride.

Die anionischen Tenside können in Form ihrer Natrium-, Kalium- und Ammoniumsalze sowie als lösliche Salze organischer Basen vorliegen.

Als nichtionische Tenside sind Anlagerungsprodukte von 1 bis 40, vorzugsweise 2 bis 20 Mol Ethylenoxid an 1 Mol einer aliphatischen Verbindung mit im wesentlichen 10 bis 20 Kohlenstoffatomen aus der Gruppe der Alkohole, Carbonsäuren, Fettamine, Carbonsäureamide oder Alkansulfonamide verwendbar. Besonders wichtig sind die Anlagerungsprodukte von 8 bis 20 Mol Ethylenoxid an primäre Alkohole, wie zum Beispiel an Kokos- oder Talgfettalkohole, an Oleylalkohol, an Oxoalkohole, oder an sekundäre Alkohole mit 8 bis 18, vorzugsweise 12 bis 18 C-Atomen. Neben den wasserlöslichen Nonionics sind aber auch nicht beziehungsweise nicht vollständig wasserlösliche Polyglykolether mit 2 bis 7 Ethylenglykolether-Resten im Molekül von Interesse, insbesondere wenn sie zusammen mit wasserlöslichen, nichtionischen oder anionischen Tensiden eingesetzt werden. Es ist bereits zuvor darauf hingewiesen worden, daß auch im erfindungsgemäßen Verfahren der Verschleppungstendenz solcher nichtionischen Tenside dadurch Rechnung getragen werden kann, daß Komponenten dieser Art ganz oder teilweise nach Abschluß der Sprühtrocknung auf ein entsprechend vorgebildetes Turmpulver aufgetragen werden. Insbesondere kann das auch Gültigkeit für bei Raumtemperatur flüssige Niotenside haben.

Außerdem können als nichtionische Tenside auch Alkyglykoside der allgemeinen Formel R-O-(G)ₓ eingesetzt werden, in der R einen primären geradkettigen oder verzweigten aliphatischen Rest mit 8 bis 22, vorzugsweise 12 bis 18 C-Atomen bedeutet, G ein Symbol ist, das für eine Glykose-Einheit mit 5 oder 6 C-Atomen steht, und der Oligomerisierungsgrad x zwischen 1 und 10 liegt.

Als organische und anorganische Gerüst- beziehungsweise Builder-Substanzen eignen sich schwach sauer, neutral oder alkalisch reagierende lösliche und/oder unlösliche Komponenten, die Calciumionen auszufällen oder komplex zu binden vermögen. Geeignete und insbesondere ökologisch unbedenkliche Builder-Substanzen sind feinkristalline synthetische Zeolithe der bereits geschilderten Art. Als weitere Builder-Bestandteile, die insbesondere zusammen mit den Zeolithen eingesetzt werden können, kommen (co-)polymere Polycarboxylate in Betracht, wie Polyacrylate, Polymethacrylate und insbesondere Copolymere der Acrylsäure mit Maleinsäure, vorzugsweise solche mit 50 % bis 10 % Maleinsäure. Das Molekulargewicht der Homopolymeren liegt im allgemeinen zwischen 1.000 und 10.000, das der Copolymeren zwischen 2.000 und 200.000, vorzugweise 50.000 bis 120.000, bezogen auf freie Säure. Ein besonders bevorzugtes Acrylsäure-Maleinsäure-Copolymer weist ein Molekulargewicht von 50.000 bis 100.000 auf. Geeignete, wenn auch weniger bevorzugte Verbindungen dieser Klasse sind Copolymere der Acrylsäure oder Methacrylsäure mit Vinylethern, wie Vinylmethylether, in denen der Anteil der Säure mindestens 50 % beträgt. Brauchbar sind ferner Polyacetalcarbonsäuren, wie sie beispielsweise in den US-Patentschriften 4,144,226 und 4,146,495 beschrieben sind sowie polymere Säuren, die durch Polymerisation von Acrolein und anschließende Disproportionierung mittels Alkalien erhalten werden und aus Acrylsäureeinheiten und Vinylalkoholeinheiten beziehungsweise Acroleineinheiten aufgebaut sind.

Brauchbare organische Gerüstsubstanzen sind beispielsweise die bevorzugt in Form ihrer Natriumsalze eingesetzten Polycarbonsäuren, wie Citronensäure und Nitrilotriacetat (NTA), sofern ein derartiger Einsatz aus ökologischen Gründen nicht zu beanstanden ist.

In Fällen, in denen ein Phosphat-Gehalt toleriert wird, können auch Phosphate mitverwendet werden, insbesondere Pentanatriumtriphosphat, gegebenenfalls auch Pyrophosphate sowie Orthophosphate, die in erster Linie als Fällungsmittel für Kalksalze wirken.

Geeignete anorganische, nicht komplexbildende Salze sind die - auch als "Waschalkalien" bezeichneten - Bicarbonate, Carbonate, Borate oder Silikate der Alkalien; von den Alkalisilikaten sind vor allem die Natriumsilikate mit einem Verhältnis Na₂O : SiO₂ wie 1 : 1 bis 1 : 3,5 brauchbar. Aus den restlichen Gruppen üblicher Waschmittelbestandteile kommen zur Mitverwendung im erfindungsgemäßen Sprühtrocknungsverfahren insbesondere Komponenten aus den Klassen der Vergrauungsinhibitoren (Schmutzträger), der Neutralsalze und der textilweichmachenden Hilfsmittel in Betracht.

Geeignete Vergrauungsinhibitoren sind beispielsweise Carboxymethylcellulose, Methylcellulose, Methylhydroxyethylcellulose und deren Gemische. Ein typisches Beispiel für einen geeigneten Vertreter der Neutralsalze ist das bereits erwähnte Natriumsulfat zu nennen. Geeignete Weichmacher sind beispielsweise quellfähige Schichtsilikate von der Art entsprechender Montmorilonite, beispielsweise Bentonit.

Hochtemperatursensitive und/oder bei Raumtemperatur flüssige übliche Mischungsbestandteile von Wasch- und Reinigungsmitteln, wie flüssige Niotensidkomponenten, Bleichmittel auf Basis von Per-Verbindungen, Enzyme aus der Klasse Proteasen, Lipasen und Amylasen beziehungsweise Bakterienstämme oder Pilze, Stabilisatoren, Parfüme, temperaturempfindliche Farbstoffe und dergleichen, werden wie bereits angegeben, zweckmäßigerweise mit den zuvor gewonnenen Trockenpulvern vermischt.

Im folgenden wird ein weiteres Ausführungsbeispiel der Erfindung anhand der beiden Figuren näher beschrieben.

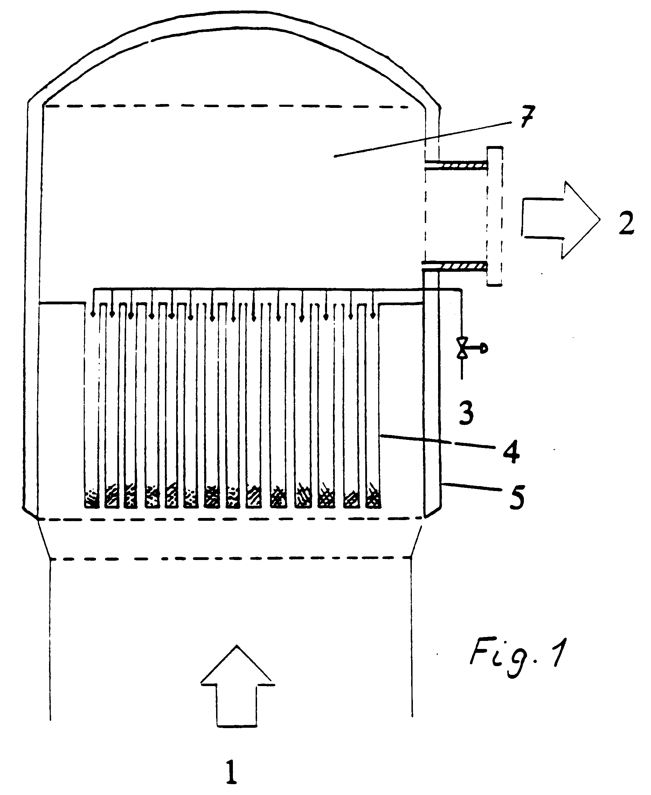

Figuren 1 und 2 zeigen den oberen Teil eines turmartigen Zerstäubungstrockners im Längsschnitt, wobei der Übersichtlichkeit halber nur die wesentlichsten Teile schematisch dargestellt sind.

Der staubhaltige Wasserdampf 1 strömt aus der Zerstäubungs- und Trocknungszone nach oben in den Turmkopf und verläßt ihn nach Passieren der Filterelemente 4 als abgereinigter Dampf 2.

Die im Turmkopf angebrachten Filterschläuche 4 sind über Drahtstützkörbe gezogen. Der Staub bleibt auf der Schlauchaußenfläche haften und der gereinigte Wasserdampf strömt durch das Filtermedium 4 hindurch in das Schlauchinnere und verläßt über den Reingasraum 7 und den Auslaßstutzen den Trocknungsbehälter. Zur Reinigung der Filterschläuche ist eine mit etwa 5 bar betriebene Wasserdampfleitung 3 vorgesehen.

Der Kopf des Trocknungsbehälters ist beheizbar, damit im Reingasraum 7 keine Kondensation auftritt. Es kann z. B. ein mit Dampf auf etwa 140 °C beheizbarer Doppelmantel 5 um den Kopf des Trockners (Figur 1) und/oder in diesem angeordnete, ebenfalls vorzugsweise mit Dampf beheizbare Heizschlangen 6 (Figur 2) vorgesehen sein. Figur 2 zeigt ferner eine Wärmedämmung 8 des Turmkopfs. Die Turmkopfbeheizung 5, 6 und die Dämmung 8 erstrecken sich auch über den Filterbereich oder zumindest dessen oberen Teil, um auch eine Kondensation an den Filterschläuchen und den Turminnenwänden in dieser Zone auszuschließen.

### Bezugszeichenliste

- 1: staubhaltiger Dampf
- 2: abgereinigter Dampf
- 3: Dampf zum Abblasen der Filterschläuche
- 4: Filterschläuche
- 5: Doppelmantel
- 6: Rohrschlange für Innenbeheizung
- 7: Reingasraum
- 8: Wärmedämmung

## Patentansprüche

1. Verfahren zum insbesondere kontinuierlichen Herstellen von schütt- und rieselfähigen Granulaten von Wertstoffen oder Wertstoffgemischen, die als Netz-, Wasch- und/oder Reinigungsmittel und/oder zur Verwendung in solchen Mitteln geeignet sind, aus ihren wäßrigen Lösungen und/oder Suspensionen
a) durch Sprühtrocknung oder Wirbelschicht-Sprühgranulation oder dergleichen innerhalb eines Trocknungsbehfilters mit einem Heißgasstrom
b) aus überhitztem Wasserdampf, wobei man
c) die Trocknung vor der thermischen Schädigung des Produkts abbricht,
d) die lagerbeständige Schütt- und Rieselfähigkeit des derart partiell aufgetrockneten Produkts gegebenenfalls durch Zusatz von zur Bindung begrenzter Wassermengen befähigten Mischungsbestandteilen und/oder durch eine Nachbehandlung sicherstellt,
e) im geschlossenen System mit einem Wasserdampfkreislaufstrom arbeitet, dem man den verdampften Wasseranteil des Einsatzgutes als Teilstrom entzieht und die abgegebene Wärmeenergie wieder zuführt und
f) den Wasserdampfkreislaufstrom von mitgetragenen Anteilen des Einsatzguts mittels aus Geweben und/oder Filzen, vorzugsweise aus Nadelfilz bestehenden Filtern, insbesondere Schlauchfiltern, reinigt.

2. Verfahren nach Anspruch 1,
**dadurch gekennzeichnet**,
daß man die Filter und/oder den Reingasraum zusätzlich beheizt.

3. Verfahren nach Anspruch 1 oder 2,
**dadurch gekennzeichnet**,
daß man den Wasserdampfkreislaufstrom von außen nach innen durch die Schlauchfilter strömen läßt und diese, insbesondere periodisch, mit Druckgasstößen von innen her beaufschlagt, so daß sich an den Filtern abgelagerte Anteile des Einsatzguts ablösen.

4. Verfahren nach Anspruch 3,
**dadurch gekennzeichnet**,
daß man als Druckgas zum Reinigen der Filter überhitzten Wasserdampf einsetzt.

5. Verfahren nach einem der Ansprüche 1 bis 4,
**dadurch gekennzeichnet**,
daß man den Wasserdampfkreislaufstrom von unten nach oben im Gegenstrom zum Trocknungsgut und durch die innerhalb des oberen Bereichs des Trocknungsbehälters angeordneten Filter leitet.

6. Verfahren nach Anspruch 5,
**dadurch gekennzeichnet,**
daß man den Wasserdampf durch senkrecht oberhalb der Sprühzone bzw. des Wirbelbetts angeordnete Filter führt.

## Claims

1. A process for the production, more particularly the continuous production, of pourable and free flowing granules of useful materials or mixtures of useful materials, which are suitable for use as and/or in wetting agents, detergents and/or cleaning products, from aqueous solutions and/or suspensions
a) by spray drying or fluidized bed spray granulation or the like in a drying vessel using a hot gas stream
b) of superheated steam,
characterized in that
c) drying is terminated before the product can be damaged by heat,
d) the long-term pourability and free flow of the product thus partly dried is optionally established by addition of mixture constituents capable of binding limited quantities of water and/or by an aftertreatment,
e) the process is carried out in a closed-loop system with a steam circuit from which the water evaporated from the starting material is removed and the thermal energy released is returned and
f) the circulating steam is freed from entrained particles of the starting material by means of filters, more particularly tube filters, consisting of woven fabrics and/or felts, preferably needle felt.

2. A process as claimed in claim 1, characterized in that the filters and/or the clean gas zone are additionally heated.

3. A process as claimed in claim 1 or 2, characterized in that the circulating steam is allowed to flow inwards through the tube filters which are exposed to surges of pressurized gas from inside, more particularly periodically, so that any particles of the starting material which have settled on the filters are removed.

4. A process as claimed in claim 3, characterized in that superheated steam is used as the pressurized gas for cleaning the filters.

5. A process as claimed in claims 1 to 4, characterized in that the steam is made to circulate upwards in counter-current to the material being dried and through the filters arranged in the upper part of the drying vessel.

6. A process as claimed in claim 5, characterized in that the steam is guided through filters arranged vertically above the spraying zone or the fluidized bed.

## Revendications

1. Procédé pour la production en particulier en continu de granulés aptes à la coulée et aptes à l'écoulement, de substances de valeur ou de mélanges de substances de valeur qui conviennent en tant qu'agents de mouillage, de lavage et/ou de nettoyage et/ou pour l'utilisation dans de tels agents, à partir de leurs solutions et/ou suspensions aqueuses.
a) par séchage par pulvérisation ou granulation par pulvérisation en lit fluidifié ou similaire à l'intérieur d'un récipient de séchage avec un courant de gaz chaud
b) à partir de vapeur d'eau surchauffée dans laquelle on
c) interrompt le séchage avant la déterioration thermique du produit
d) on garantit l'aptitude à la coulée et à l'écoulement stable au stockage du produit partiellement desséché de cette manière, le cas échéant, par ajout de constituants de mélange aptes à la liaison de quantités limitées d'eau et/ou par un traitement postérieur
e) on travaille en système fermé avec un courant de recyclage de vapeur d'eau, on retire la quantité d'eau évaporée du produit d'utilisation sous forme de courant partiel et on amène, à nouveau, l'énergie thermique dégagée et
f) on purifie le courant de recyclage de vapeur d'eau des fractions portées du produit d'utilisation à l'aide de filtres formés de tissu et/ou de feutre, de préférence en feutre aiguilleté, en particulier de filtre à manche.

2. Procédé selon la revendication 1, caractérisé en ce que l'on chauffe le filtre et/ou la chambre de gaz pur, en supplément.

3. Procédé selon la revendication 1 ou la revendication 2, caractérisé en ce que l'on fait s'écouler le courant de recyclage de vapeur d'eau de l'extérieur vers l'intérieur à travers le filtre à manche et on admet celui-ci, en particulier périodiquement par à-coups de gaz sous pression de l'intérieur, de façon que les fractions déposées sur les filtres du produit d'utilisation se détachent.

4. Procédé selon la revendication 3, caractérisé en ce que l'on met en oeuvre comme gaz sous pression pour le nettoyage du filtre de la vapeur d'eau surchauffée.

5. Procédé selon l'une des revendications 1 à 4, caractérisé en ce que l'on conduit le courant de recyclage de la vapeur d'eau du bas vers le haut à contre- courant vers le produit de séchage et à travers les filtres disposés à l'intérieur de la zone supérieure du récipient de séchage.

6. Procédé selon la revendication 5, caractérisé en ce que l'on conduit la vapeur d'eau à travers le filtre disposé verticalement au-dessus de la zone de pulvérisation ou du lit fluidifié.
